(19) Europäisches Patentamt
European Patent Office
Office européen des brevets

(11) **EP 1 811 714 B1**

(12) **EUROPÄISCHE PATENTSCHRIFT**

(45) Veröffentlichungstag und Bekanntmachung des Hinweises auf die Patenterteilung:
**01.02.2012 Patentblatt 2012/05**

(51) Int Cl.:
***H04L 7/033*** *(2006.01)*

(21) Anmeldenummer: **06026973.5**

(22) Anmeldetag: **28.12.2006**

(54) **Integrierte Schaltung für eine asynchrone, serielle Datenübertragung mit einem Bitlängen Zähler**

Integrated circuit for asynchronous serial data transfer with a bitlength counter

Commutation intégrée pour une transmission des données asynchrone, sérielle et dotée d'un compteur de bilongueurs

(84) Benannte Vertragsstaaten:
**DE FR GB IT NL**
Benannte Erstreckungsstaaten:
**AL BA HR MK RS**

(30) Priorität: **23.01.2006 DE 102006003281**

(43) Veröffentlichungstag der Anmeldung:
**25.07.2007 Patentblatt 2007/30**

(73) Patentinhaber: **Micronas GmbH**
**79108 Freiburg (DE)**

(72) Erfinder: **Ritter, Joachim**
**79540 Lorräch (DE)**

(74) Vertreter: **Koch Müller**
**Patentanwaltsgesellschaft mbH**
**Maaßstraße 32/1**
**69123 Heidelberg (DE)**

(56) Entgegenhaltungen:
**EP-A- 0 940 950          EP-A2- 0 370 528**
**DE-A1- 19 534 693      US-A1- 5 371 772**
**US-A1- 2004 062 331**

- **PRIMECELL UART (PL011) TECHNICAL REFERENCE MANUAL, [Online] Nr. r1p4, 2005, XP007901821 Gefunden im Internet: URL:http://www.arm.com/pdfs/DDI0183F_uart_pl011_r1p4_trm.pdf> [gefunden am 2007-03-02]**
- **ANON: "PC16550D Universal Asynchronous Receiver/Transmitter with FIFOs" ANNOUNCEMENT NATIONAL SEMICONDUCTOR, Juni 1995 (1995-06), Seiten 1-22, XP002264776**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine integrierte Schaltung für eine asynchrone, serielle Datenübertragung mit einer Struktur zum Ausbilden eines Bitlängen-Zählers gemäß den oberbegrifflichen Merkmalen des Patentanspruchs 1 bzw. auf ein Verfahren zum Betreiben einer solchen Schaltung.

In einem Kommunikationssystem aus jeweils einem oder mehreren Sendern und Empfängern werden Daten mit einer Übertragungsgeschwindigkeit bzw. Übertragungsrate übertragen, wobei die Übertragungsgeschwindigkeit und die Übertragungsrate durch die Anzahl der übertragenen Bit pro Sekunde bzw. dem Kehrwert davon, der Dauer eines Bit, definiert werden.

Als seriell wird eine Übertragung bezeichnet, wenn die einzelnen Bit zwischen einem Sender und einem Empfänger nacheinander übertragen werden. Als asynchron wird eine Übertragung bezeichnet, wenn zusätzlich zu den Daten kein Taktsignal zwischen Sender und Empfänger übertragen wird, welches eine synchrone Abtastung der einzelnen Bit beim Empfänger ermöglichen würde. Bei der asynchronen Übertragung muss ein Empfänger entsprechend ein zu Beginn einer Übertragung gesendetes Synchronisationszeichen erkennen und von diesem aus die Abtastzeitpunkte für die nachfolgenden Datenbit berechnen. Dazu muss der Empfänger die Zeitdauer für die Übertragung eines Bit, d. h. die Bitlänge, genügend genau einstellen können. Ein Empfänger kann in der Regel nur Bitlängen einstellen, welche einer ganzzahligen Anzahl von Takten eines separaten Taktgebers bzw. Oszillators entsprechen. Aus diesem Grund kann der Empfänger eine gewünschte Übertragungsrate nur mit einer begrenzten Genauigkeit einstellen. Diese theoretisch erreichbare Genauigkeit hängt unter anderem vom Verhältnis der Übertragungsrate zur Frequenz des Oszillators ab. Die theoretisch erreichbare Genauigkeit G1 berechnet sich gemäß

$$G1 \; = \; U \; / \; F \; \times \; 100$$

mit G1 als der prinzipiell bzw. theoretisch erreichbaren Genauigkeit in Prozent, U als der Übertragungsrate in Bit/s und F als der Frequenz des Oszillators in Hz.

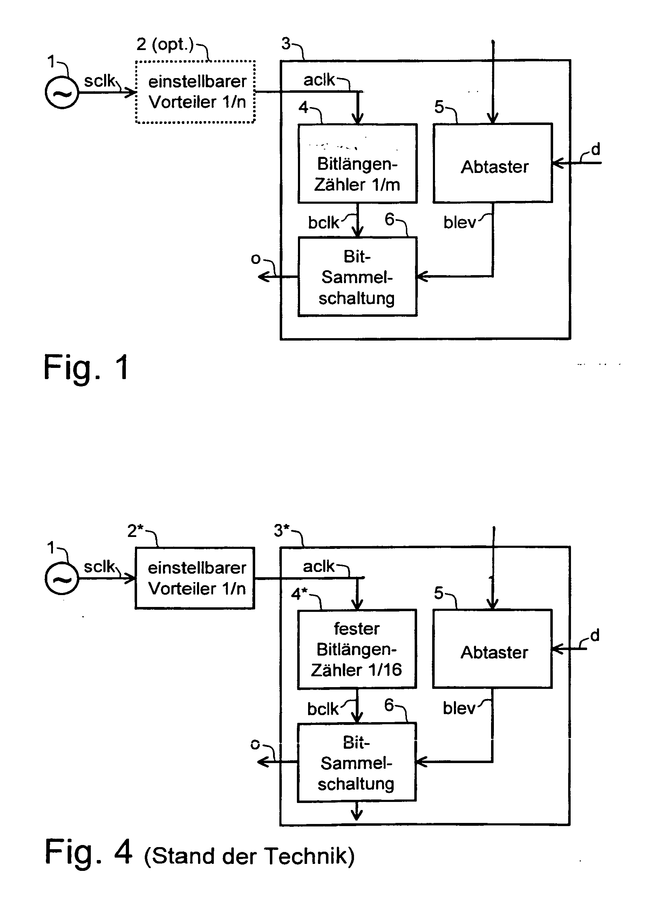

Fig. 4 zeigt Komponenten eines beispielhaften Empfängers für serielle Datenströme einer asynchronen Übertragung. Von einem Oszillator 1 wird ein Systemtakt sclk an einen einstellbaren Vorteiler 2* zum Teilen des Systemtaktes sclk mit dem Divisor n angelegt. Der einstellbare Vorteiler 2* gibt einen entsprechenden Abtasttakt aclk an einen Empfänger 3*, wobei der Empfänger 3* durch eine bauliche Komponente ausgebildet wird. Der Abtasttakt aclk wird im Empfänger 3* an einen sogenannten festen Bitlängen-Zähler 4* und einem Abtaster 5 angelegt. Dem Abtaster 5* wird außerdem eine Folge serieller Daten d angelegt, welche mittels des Abtasttaktes aclk abgetastet werden. Der Abtaster 5 gibt einen entsprechenden Bit-Pegel blev an eine Bit-Sammelschaltung 6 aus. Der feste Bitlängen-Zähler teilt den anliegenden Abtasttakt aclk durch beispielsweise den fest eingestellten Wert 16 und gibt einen entsprechenden Bit-Takt bclk an die Bit-Sammelschaltung 6 aus. Die Bit-Sammelschaltung 6 erzeugt ein entsprechendes Ausgangssignal bzw. Ausgangsdaten o, welche einem Ausgang des Empfängers angelegt werden.

Ein derartiger Empfänger 3* für asynchrone, serielle Daten d unterteilt entsprechend die Bit-Dauer in eine feste Anzahl von Abtasttakten, z. B. 8 oder 16 Takte pro Bit. Der Abtasttakt aclk wird durch den einstellbaren Vorteiler 2* vom Systemtakt sclk des Oszillators 1 abgeleitet. Einstellbar ist dabei die durch den Vorteiler 2* vorzunehmende Teilung zur Bereitstellung eines gewünschten Abtasttaktes aclk. Die Anzahl von Takten pro Bit ist jedoch durch die Hardware, d. h. den strukturellen Aufbau des festen Bitlängen-Zählers 4* einer entsprechenden integrierten Schaltung festgelegt. Der Vorteiler 2* kann im allgemeinen nur mit ganzzahligen Teilern n geladen werden. Diese Vorgaben, eine feste Anzahl von Takten pro Bit und ganzzahlige Teiler n für den Vorteiler 2* schränken die erreichbare Genauigkeit ein. Die Genauigkeit hängt dabei vom Verhältnis der Übertragungsrate zur Frequenz des Oszillators 1 geteilt durch die Anzahl der Takte pro Bit ab. Die erreichbare Genauigkeit G2 entspricht

$$G2 \; = \; (U \; \times \; TpB) \; / \; F \; \times \; 100$$

mit G2 als erreichbarer Genauigkeit in Prozent, U als Übertragungsrate in Bit/s, TpB als Anzahl von Takten pro Bit, z. B. 8 oder 16, und F als Frequenz des Oszillators in Hz.

Entsprechend ändert sich die Bitlänge gleich um 8 bzw. 16 Oszillatortakte, wenn der Teilerwert des Vorteilers 2* um 1 geändert wird. Eine Annäherung an eine gewünschte Bitlänge kann nur in Schritten von 8 bzw. 16 Oszillatortakten durchgeführt werden, was im ungünstigsten Fall zu einer fehlerhaften Bestimmung um 4 bzw. 8 Oszillatortakte führt.

Aus ARM PrimeCell UART (PL011), Technical Reference Manual, 2001, ist ein Empfänger für asynchrone serielle Datenübertragungen bekannt, dem ein Baudraten-Generator zum Bereitstellen zweier verschiedener Takte vorgeschaltet ist. Aus DesignWare DW_apb_uart Databook, chapter 1: Description of DW_apb_uart, 2003, ist ein Empfänger bekannt, bei dem einer von zwei verschiedenen Takten auswählbar ist. Dies bedingt ausdrückliche Beschränkungen für den Empfang. Aus National Semiconductor, PC16550D Universal Asynchronous Receiver/Transmitter with FI-FOs, Juni 1995, ist ein programmierbarer Baudraten-Generator bekannt. Aus QuickLogic Corporation, Open Source 16550 UART Core, Application Note 69, 2002, ist ein programmierbarer Baudraten-Generator bekannt, welcher einen Baudratentakt und einen Empfänger-Referenztakt erzeugt.

Nachteilhaft bei allen Empfängern ist die große Schrittweite von 8 oder 16 Oszillatörtakten. Diese hat zur Folge, dass bei gegebener Oszillatorfrequenz bestimmte Übertragungsraten nicht mit einer erforderlichen Genauigkeit eingestellt werden können. Beispielsweise ergibt eine Übertragungsrate U = 20 KBit/s, eine Oszillatorfrequenz F = 4 MHz und eine Bitlänge TpB = 8 Takte eine erreichbare Genauigkeit G2 = 20000 / 4000000 x 8 x 100 = 4%. Ein solcher Fehler ist jedoch in vielen Anwendungsfällen nicht tolerierbar.

Um diese große Schrittweite von üblicherweise 8 oder 16 Takten und den damit maximal verbleibenden Fehler zu verringern, wird ein Verfahren eingesetzt, welches als "fractional pre-scaler" (fraktionaler Vorskalierer) bezeichnet wird, womit ein Vorteiler bezeichnet wird, welcher in gewissen Abständen einen Abtasttakt um einen Oszillatortakt verlängert oder verkürzt. Dadurch werden ein oder mehrere der 8 bzw. 16 Abtasttakte pro Bit um einen Oszillatortakt verlängert oder verkürzt. Neben dem großen verfahrenstechnischen Aufwand kommt hinzu, dass auch die Umsetzung der Hardwarestrukturen aufwändig ist.

Alternativ ist bekannt, den Oszillator so zu beeinflussen, dass dessen Ausgangsfrequenz nicht mehr konstant bleibt, sondern, je nach Notwendigkeit des Empfängers, mal schneller, mal langsamer wird. Eine solche Lösung verbietet sich jedoch in Systemen, in welchen andere Module auf einen konstanten Oszillatortakt angewiesen sind oder wenn zwei der beschriebenen Empfänger mit unterschiedlichen Übertragungsraten arbeiten müssen und von einem gemeinsamen Oszillatortakt versorgt werden.

Als weiterer Stand der Technik wird die EP 0 370 528 A2 genannt.

Die Aufgabe der Erfindung besteht darin, eine integrierte Schaltung für eine asynchrone, serielle Datenübertragung mit einer alternativen Struktur vorzuschlagen.

Diese Aufgabe wird durch die integrierte Schaltung mit den Merkmalen des Patentanspruchs 1 bzw. durch ein Verfahren zum Betreiben einer solchen integrierten Schaltung mit den Merkmalen des Patentanspruchs 7 gelöst.

Vorteilhafte Ausgestaltungen sind Gegenstand von abhängigen Ansprüchen

Bevorzugt wird demgemäss eine integrierte Schaltung für eine asynchrone, serielle Datenübertragung mit Strukturen zum Ausbilden eines Eingangsanschlusses zum Anlegen asynchroner, serieller Daten, zum Ausbilden eines Abtasters zum Abtasten der asynchronen, seriellen Daten mittels eines daran anliegenden Abstattaktes und zum Ausbilden eines Bitlängen-Zählers zum Bestimmen einer Bitdauer durch Zählen einer Anzahl von Takten des Abtasttaktes oder eines Bitlängen-Zählertaktes, wobei ein Bitlängenanschluss zum variablen Einstellen der Anzahl der Takte des Bitlängen-Zählers an der integrierten Schaltung und/oder am Bitlängen-Zähler ausgebildet ist.

Bevorzugt wird insbesondere eine integrierte Schaltung, bei welcher der Bitlängen-Zähler als einstellbarer Bitlängen-Zähler mit dem Bitlängenanschluss ausgebildet ist.

Bevorzugt wird insbesondere eine integrierte Schaltung, bei welcher der Abtasttakt dem Bitlängen-Zähler von einem einstellbaren Vorteiler mit einer integrierten Takt-Auswahleinrichtung angelegt wird.

Bevorzugt wird gemäß alternativer Ausführungsform insbesondere eine integrierte Schaltung, bei welcher einem Vorteiler der Abtasttakt und eine Einstellgröße zum Bestimmen der Anzahl von Takten anliegt, wobei der Vorteiler ausgebildet ist, mittels der Einstellgröße und des Abtasttaktes einen Bitlängen-Zählertakt für den Bitlängenzähler bereitzustellen, welcher den Bitlängen-Zähler die Bitdauer durch Zählen einer Anzahl von Takten des relativ zum Abtasttakt variabel einstellbaren Bitzählertaktes bestimmbar macht. Dabei wird insbesondere bevorzugt eine integrierte Schaltung, bei welcher der Vorteiler eine Takt-Auswahleinrichtung und einen Einstellgrößeneingang zum Eingeben der Einstellgröße aufweist. Bevorzugt wird dabei insbesondere eine integrierte Schaltung, bei welcher der Vorteiler und der Bitlängen-Zähler durch eine gemeinsame strukturelle Einheit der integrierten Schaltung ausgebildet sind.

Verfahrensgemäß wird bevorzugt ein Verfahren zum Betreiben insbesondere einer solchen integrierten Schaltung, bei dem einem einstellbaren Bitlängen-Zähler eine Einstellgröße angelegt wird zum variablen Einstellen des Bitlängen-Zählers relativ zu einem Abtasttakt zum Abtasten asynchroner, serieller Daten.

Vorteilhafterweise wird im Vergleich zum beschriebenen Stand der Technik eine Struktur bereitgestellt, bei welcher der einstellbare Vorteiler und der feste Bitlängen-Zähler zusammengefasst werden zu einem einstellbaren Bitlängen-Zähler. Damit kann eine gewünschte Bitlänge in Oszillator-Taktschritten eingestellt werden.

Vorteilhafterweise ist dadurch die Bitlänge in kleineren Schritten und somit genauer einstellbar. Außerdem kann ermöglich werden, dass der Abtaster mit einer höheren Frequenz arbeitet, so dass dann ein Synchronzeichen am Anfang eines seriellen Datenstroms mit höherer Auflösung abgetastet und damit schneller erkannt werden kann. Ein weiterer Vorteil besteht darin, dass eine Verzögerung, welche durch eine eventuelle Mehrfachabtastung am Dateneingang verursacht wird, nicht mehr so sehr ins Gewicht fällt, da sie nur maximal 1/8 oder 1/16 im Vergleich zu den üblichen Lösungen beträgt.

Vorteilhafterweise kann eine Umsetzung des Konzepts nicht nur in Form entsprechender Strukturbildungen innerhalb einer integrierten Schaltung umgesetzt werden sondern auch durch eine geeignete Bereitstellung individueller einzelner Schaltungskomponenten als einzelne bauliche Komponenten, welche miteinander verschaltet werden. Beispielsweise können der einstellbarer Vorteiler mit einer Takt-Auswahleinrichtung und ein fester Bitlängen-Zähler als eine gemeinsame Komponente bereitgestellt werden, während Abtaster und Bit-Sammelschaltung als eine oder mehrere weitere individuelle Komponenten bereitgestellt werden.

Ein Ausführungsbeispiel wird nachfolgend anhand der Zeichnung näher erläutert. Es zeigen:

Fig. 1 eine einfache Empfängerschaltung für asynchrone, serielle Daten,

Fig. 2 eine weitere beispielhafte Empfängerschaltung zum Empfang asynchroner, serieller Daten,

Fig. 3 eine noch weiterer Empfängerschaltung zum Empfang asynchroner, serieller Daten und

Fig. 4 eine Empfängerschaltung gemäß dem Stand der Technik.

Wie dies aus Fig. 1 ersichtlich ist, besteht eine bevorzugte Empfängerschaltung gemäß einem vereinfacht dargestellten Grundprinzip aus verschiedenen einzelnen Komponenten, welche vorzugsweise durch eine integrierte Schaltung umgesetzt sind.

Von einem Oszillator 1 wird ein Systemtakt sclk bereitgestellt und einem einstellbaren Vorteiler 2 angelegt, welcher den Systemtakt sclk mittels eines einstellbaren Divisors n teilt. Der einstellbare Vorteiler 2 gibt einen entsprechend erzeugten Abtasttakt aclk aus, welcher einem eigentlichen Empfänger 3 angelegt wird. Bei dem einstellbaren Vorteiler 2 handelt es sich gemäß einer besonders einfachen Ausführungsform um eine optionale Komponente, welche auch entfallen kann.

Der Empfänger 3 weist neben weiteren gegebenenfalls üblichen Komponenten einen einstellbaren Bitlängen-Zähler 4 auf, welchem der Abtasttakt aclk angelegt ist. Der einstellbare Bitlängen-Zähler 4 teilt das Abtastsignal aclk mittels eines einstellbaren Divisors m, um einen Bit-Takt bclk auszugeben. Der Divisor m entspricht gemäß der einfachsten Ausführungsform einer Anzahl m von Takten des Abtasttakts aclk, welche vom Bitlängen-Zähler 4 gezählt werden, um eine Bitdauer zu bestimmen. Der Divisor bzw. die Anzahl m kann je nach Bedarf eingestellt werden, so dass der Bitlängen-Zähler 4 hinsichtlich der Bestimmung einer Bitdauer einstellbar ist.

Der Empfänger 3 umfasst außerdem einen Abtaster 5, an dem ebenfalls der Abtasttakt aclk anliegt. An dem Abtaster 5 sind außerdem über einen entsprechenden Eingangsanschluss asynchrone, serielle Daten d angelegt, welche mittels des Abtasttakts aclk abgetastet werden. Der Abtaster 5 gibt in für sich bekannter Art und Weise einen Bit-Pegel blev aus.

Der Empfänger 3 weist außerdem eine Bit-Sammelschaltung 6 auf, an deren Eingängen der Bit-Pegel blev des Abtasters 5 und der Bit-Takt bclk des einstellbaren Bit-Zählers 4 anliegen. Die Bit-Sammelschaltung erzeugt in ebenfalls für sich bekannter Art und Weise ein entsprechendes Ausgangssignal bzw. auszugebende Daten o, welche an einem Ausgang des Empfängers 3 angelegt werden.

Der Empfänger 3 wird vorzugsweise durch entsprechende Strukturen einer integrierten Schaltung ausgebildet, wobei die integrierte Schaltung übliche interne Anschlüsse zum Anlegen des Abtasttaktes aclk und der seriellen, asynchronen Daten d sowie zum Ausgeben der entsprechend von der Bit-Sammelschaltung 6 bereitgestellten Daten o aufweist. Der einstellbare Bitlängen-Zähler 4 bei einer solchen Ausführungsform umfasst entsprechend sowohl einen einstellbaren Vorteiler als auch einen für sich bekannten festen Bitlängen-Zähler in zusammengefasster Form, um einen einstellbaren Bitlängen-Zähler 4 bereitzustellen. Damit kann eine gewünscht Bitlänge in Oszillatortaktschritten eingestellt werden, wenn als der Abtasttakt aclk direkt der Oszillatortakt sclk unter Umgehung eines zusätzlichen optionalen einstellbaren Vorteilers 2 angelegt wird.

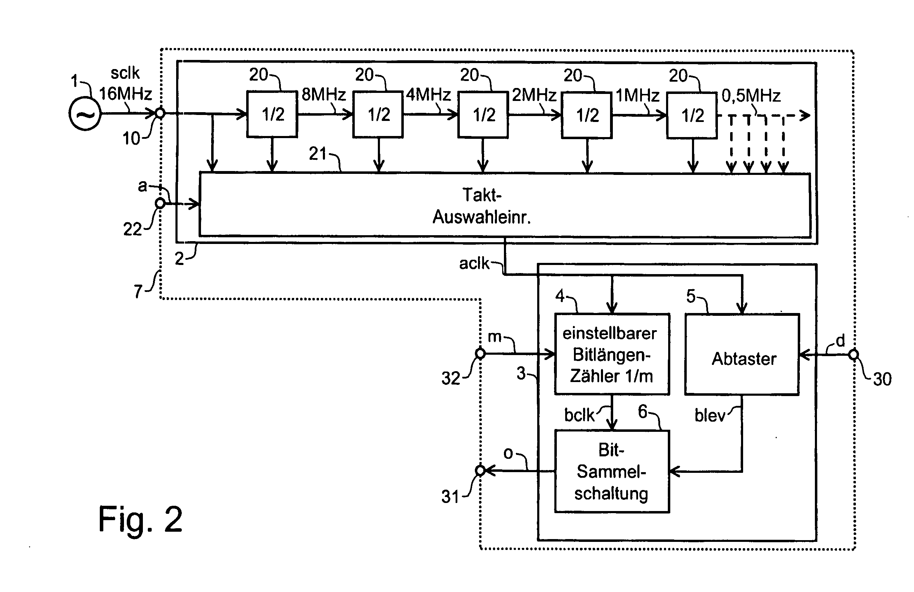

Fig. 2 zeigt eine weitere Ausführungsform einer integrierten Schaltung 7, bei welcher der eigentliche Empfänger 3 wiederum insbesondere die Komponenten gemäß Fig. 2 aufweist. Der Empfänger 3 umfasst einen einstellbaren Bitlängen-Zähler 4 und einen Abtaster 5, denen der Abtasttackt aclk angelegt wird. Über einen Datenanschluss 30 werden asynchrone, serielle Daten d an den Abtaster 5 angelegt. Der Divisor bzw. die Anzahl m der Takte des Bitlängen-Zählers 4 werden über einen Bitlängenanschluss 32 für den Bitlängenzähler 4 bereitgestellt. Der Bit-Takt bclk des Bitlängen-Zählers 4 und der Bit-Pegel blev des Abtasters 5 werden wiederum einer Bit-Sammelschaltung 6 angelegt, welche Daten o an einem Datenausgang 31 bereitstellt.

Dem dargestellten Empfänger 3 ist ein bevorzugter Vorteiler 2 vorgeschaltet. Der Vorteiler 2 weist einen Takteingang 10 zum Anlegen des vom Oszillators 1 bereitgestellten Systemtaktes sclk auf. Der Takt des Takteingangs 10 wird einer einfachen Taktteilerkette aus einer Vielzahl von hintereinander geschalteten Taktteilern 20 angelegt. Beispielsweise wird ein Systemtakt sclk mit 16 MHz durch den ersten Taktteiler 20 auf 8 MHz, durch den zweiten Taktteiler 20 auf 4 MHz usw. geteilt. Jeder Taktteiler legt ein entsprechendes Taktsignal an eine Takt-Auswahleinrichtung 21 an, der auch der Systemtakt sclk in ungeteilter Form angelegt wird. Außerdem liegt an der Takt-Auswahleinrichtung ein Auswahlsignal a über einen Auswahleingang 22 an. Mittels des Auswahlsignals a, welches eine einstellbare Größe darstellt, wählt die Takt-Auswahleinrichtung ein entsprechende Taktsignal aus, welches als der Abtasttakt aclk für den Empfänger 3 bereitgestellt wird. Dem Empfänger ist somit eine optionaler Vorteiler 2 vorgeschaltet, welcher eine erweiterte Taktauswahl und damit größere Bandbreite ermöglicht. Hierbei ist noch anzumerken, dass $1/2^n$ als Teiler ein Spezialfall ist, der besonders einfach schaltungstechnisch realisiert werden kann.

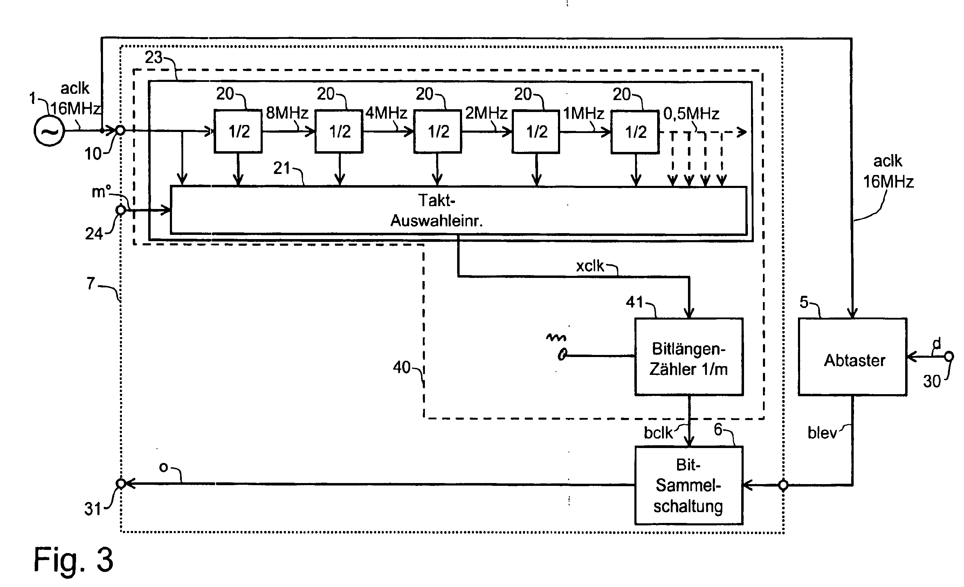

Fig. 3 zeigt eine weitere Ausführungsform, welche Strukturen einer integrierten Schaltungsanordnung 7 mit einem integrierten einstellbaren Vorteiler 23 aufweist. Der Vorteiler 23 entspricht hinsichtlich des Aufbaus dem Vorteiler 2 aus Fig. 2 und umfasst eine Teilerkette mit Teilern 20, denen über einen Takteingang 10 ein Abtasttakt aclk angelegt wird, der beispielsweise direkt oder über einen weiteren vorgeschalteten Teiler einem Oszillator 1 entstammt. Dieser Abtasttakt aclk sowie die einzelnen Stufentakte der Taktteiler 20 werden einer Takt-Auswahleinrichtung 21 angelegt. An der Takt-Auswahleinrichtung 21 liegt außerdem ein Auswahlsignal bzw. eine Einstellgröße m ° über einen entsprechenden Eingang 24 an. Der Vorteiler 23 gibt somit abhängig von der anliegendenden Einstellgröße m° einen Bitlängen-Zählertakt xclk aus.

Der Bitlängen-Zählertakt xclk ist einem Bitlängen-Zähler 41 angelegt, welcher als einstellbarer Bitlängen-Zähler oder wie dargestellt als fester Bitlängen-Zähler 41 ausgestaltet ist. Der Bitlängen-Zähler 41 gibt wiederum einen Bit-Takt bclk an eine Bit-Sammelschaltung 6 aus.

Der Abtasttakt aclk, welcher dem Vorteiler 23 zugeführt wird, wird außerdem einem davon unabhängigen Abtaster 5 angelegt. An einem weiteren Eingang des Abtasters 5 liegen wiederum asynchrone, serielle Daten d über einen Eingangsanschluss 30 an. Der Abtaster 5 gibt einen Bit-Pegel blev an die Bit-Sammelschaltung 6 aus, welche wiederum in für sich bekannter Art und Weise entsprechende Daten o an einem Ausgangsanschluss 31 bereitstellt. Dadurch, dass der Verteiler in den Bitlängen-Zähler 41 integriert ist, bekommt der Abtaster 5 einen höheren Takt als bei herkömmlichen Schaltungen.

Bei dieser Schaltungsanordnung werden der Vorteiler 23 und der Bitlängen-Zähler 41 derart angesteuert, dass der Bitlängen-Zähler eine effektive und einstellbare Teilung 1/m abhängig von dem anliegenden Abtasttakt aclk und der Einstellgröße m° bereitstellt. Dabei bilden der Vorteiler 23 und der Bitlängen-Zähler 41 eine strukturelle Einheit 40 in der integrierten Schaltung 7 aus, während der Abtaster 5 und die Bit-Sammelschaltung 6 durch weitere strukturelle Komponenten der integrierten Schaltung 7 oder durch eigenständige Komponenten ausgebildet werden. Dabei können alle Komponenten als eigenständige Baugruppen bzw. IG's ausgebildet sein.

**Patentansprüche**

1. Integrierte Schaltung (7) für eine asynchrone, serielle Datenübertragung mit

    - einem Eingangsanschluss (30) zum Anlegen asynchroner, serieller Daten (d),
    - einem Abtaster (5) zum Abtasten der asynchronen, seriellen Daten (d) mittels eines daran anliegenden Abtasttaktes (aclk), und
    - einem Bitlängen-Zähler, (4; 41) zum Bestimmen einer Bitdauer durch Zählen einer Anzahl (m) von vorgegebenen Takten,

    **dadurch gekennzeichnet, dass**
    der Bitlängen-Zähler (4) als einstellbarer Bitlängen-Zähler mit einem Bitlängenanschluss (32) zum variablen Einstellen der Anzahl (m) der Takte einer Bitlänge an der integrierten Schaltung (7) oder am Bitlängen-Zähler (4) ausgebildet ist, und bei welcher die vorgegebenen Takte von dem Abtasttakt (aclk) oder von einem Bitlängen-Zählertakt (xclk) dem Bitlängen-Zähler (4) von einem einstellbaren Vorteiler (20) mit einer integrierten Takt-Auswahleinrichtung (21) angelegt wird.

2. Integrierte Schaltung nach Anspruch 1, bei welcher einem Vorteiler (23) der Abtasttakt (aclk) und eine Einstellgröße (m°) zum Bestimmen der Anzahl (m) von Takten anliegt, wobei der Vorteiler (23) ausgebildet ist, mittels der Einstellgröße (m°) und des Abtasttaktes (aclk) einen Bitlängen-Zählertakt (xclk) für den Bitlängenzähler (41) bereitzustellen, welcher den Bitlängen-Zähler (4) die Bitdauer durch Zählen einer Anzahl von Takten des relativ zum Abtasttakt (aclk) variabel einstellbaren Bitzählertaktes (xclk) bestimmbar macht.

3. Integrierte Schaltung nach Anspruch 3, bei welcher der Vorteiler (23) eine Takt-Auswahleinrichtung (21) und einen Einstellgrößeneingang (24) zum Eingeben der Einstellgröße (m°) aufweist.

4. Integrierte Schaltung nach einem der Ansprüche 2 bis 4, bei welcher der Vorteiler (23) und der Bitlängen-Zähler (4; 41) durch eine gemeinsame strukturelle Einheit (40) der integrierten Schaltung (7) ausgebildet sind.

5. Integrierte Schaltung nach einem der Ansprüche 2 bis 5,
    **dadurch gekennzeichnet, dass** der Verteiler (23) als Teilergröße $1/2^n$ aufweist mit n = 1, 2, 3... usw.

6. Integrierte Schaltung nach einem der Ansprüche 2 bis 6,
    **dadurch gekennzeichnet, dass** der Abtaster (5) mit einem separaten Takt (sp) gesteuert wird.

7. Verfahren zum Betreiben einer integrierten Schaltung (7) für eine asynchrone, serielle Datenübertragung nach einem vorstehenden Anspruch, bei dem einem einstellbaren Bitlängen-Zähler (4; 40) über einen Bitlangenamschluss eine Einstellgröße (a, m; m°) angelegt wird zum variablen Einstellen des Bitlängen-Zählers relativ zu einem Abtasttakt (aclk) oder Bitlängen-Zählertakt (xcln), welche über einen einstellbaren Vorteilen (20) mit einer integrierten Taktauswahleinrichtung angelegt werden, zum Abtasten asynchroner, serieller Daten.

## Claims

1. Integrated circuit (7) for an asynchronous serial data transmission, comprising

    - an input terminal (30) for the application of asynchronous serial data (d),
    - a scanner (5) for scanning the asynchronous serial data (d) by means of a scanning clock pulse (aclk) applied thereto and
    - a bit-length counter (4; 41) for determining a bit duration by counting a number (m) of predetermined clock pulses,

    **characterised in that** the bit-length counter (4) is constructed as a settable bit-length counter with a bit-length terminal (32) for variable setting of the number (m) of the clock pulses of a bit length at the integrated circuit (7) or at the bit-length counter (4), and in which the predetermined clock pulses are established by the scanning clock pulse (aclk) or by a bit-length counter clock pulse (xclk) at the bit-length counter (4) by a settable upstream divider (20) with an integrated clock pulse selecting device (21).

2. Integrated circuit according to claim 1, in which the scanning clock pulse (aclk) and a setting magnitude (m°) are applied to an upstream divider (23) for determining the number (m) of clock pulses, wherein the upstream divider (23) is constructed to provide for the bit-length counter (41) by means of the setting magnitude (m°) and the scanning clock pulse (aclk) a bit-length counter clock pulse (xclk) which makes it possible for the bit-length counter (4) to determine the bit duration by counting a number of clock pulses of the bit counter clock pulse (xclk) variably settable relative to the scanning clock pulse (aclk).

3. Integrated circuit according to claim 3, in which the upstream divider (23) comprises a clock pulse selecting device (21) and a setting magnitude input (24) for input of the setting magnitude (m°).

4. integrated circuit according to any one of claims 2 to 4, in which the upstream divider (23) and the bit-length counter (4; 41) are formed by a common structural unit (40) of the integrated circuit (7). -

5. Integrated circuit according to any one of claims 2 to 5, **characterised in that** the upstream divider (23) has $1/2^n$ as divider magnitude, wherein n = 1, 2, 3 ... etc.

6. Integrated circuit according to any one of claims 2 to 6, **characterised in that** the scanner (5) is controlled by a separate clock rate (sp).

7. Method of operating an integrated circuit (7) for an asynchronous serial data transmission according to any one of the preceding claims, in which a setting magnitude (a, m; m°) is applied by way of a bit-length terminal to a settable bit-length counter (4; 40) for variable setting of the bit-length counter relative to a scanning clock pulse (aclk) or bit-length counter clock pulse (sclk), which are applied by way of a settable upstream divider (20) with an integrated clock pulse selecting device, for the scanning of asynchronous serial data.

## Revendications

1. Circuit intégré (7) pour une transmission de données sérielle, asynchrone, comprenant :

    - un raccordement d'entrée (30), pour appliquer des données (d) sérielles, asynchrones,
    - un scrutateur (5), pour scruter les données (d) sérielles, asynchrones, au moyen d'une cadence de scrutation (aclk) y étant appliquée, et
    - un compteur de longueur de bits (4 ; 41), pour déterminer une durée de bits par comptage d'un nombre (m) de cycles prédéterminé,

    **caractérisé en ce que**
    le compteur de longueur de bits (4) est réalisé sous la forme du compteur de longueur de bits réglable, avec un raccordement de longueur de bits (32) pour effectuer le réglage variable du nombre (m) des cycles d'une longueur de bits au circuit intégré (7), ou au compteur de longueur de bits (4), et pour lequel les cycles prédéterminés sont appliqués par la cadence de scrutation (aclk) ou par une cadence de compteur de longueur de bits (xclk), au compteur de longueur de bits (4), par un prédiviseur (20) réglable, avec un dispositif intégré de sélection de cadence (21).

2. Circuit intégré selon la revendication 1, dans lequel la cadence de scrutation (aclk) et une grandeur de réglage (m°) pour déterminer le nombre (m) de cycles sont appliquées à un prédiviseur (23), le prédiviseur (23) étant réalisé pour fournir, au moyen de la grandeur de réglage (m°) et de la cadence de scrutation (aclk), une cadence de compteur de longueur de bits (xclk) pour le compteur de longueur de bits (41), rendant la durée de bits déterminable au compteur de longueur de bits (4), par comptage d'un nombre de cycles de la cadence de compteur de bits (xclk), réglable de manière variable par rapport à la cadence de scrutation (aclk).

**3.** Circuit intégré selon la revendication 2, dans lequel le prédiviseur (23) présente un dispositif intégré de sélection de cadence intégré (21) et une entrée de grandeur de réglage (24), pour introduire la grandeur de réglage (m°).

**4.** Circuit intégré selon l'une des revendications 2 à 3, dans lequel le prédiviseur (23) et le compteur de longueur de bit (4 ; 41) sont réalisés selon une unité structurelle (40) commune du circuit intégré (7).

**5.** Circuit intégré selon l'une des revendications 2 à 4, **caractérisé en ce que** le prédiviseur (23) présente comme grandeur de diviseur $1/2^n$, avec n = 1, 2, 3 ... etc.

**6.** Circuit intégré selon l'une des revendications 2 à 5, **caractérisé en ce que** le scrutateur (5) est commandé avec une cadence (sp) séparée.

**7.** Procédé de fonctionnement d'un circuit intégré (7) pour une transmission de données sérielle, asynchrone, selon l'une des revendications précédentes, dans lequel une grandeur de réglage (a, m ; m°) est appliquée à un compteur de longueur de bits (4 ; 41) réglable, par l'intermédiaire d'un raccordement de longueur de bits, de manière à effectuer un réglage variable du compteur de longueur de bits, par rapport à une cadence de scrutation (aclk), ou une cadence de compteur de longueur de bits (xclk), appliquée par l'intermédiaire d'un prédiviseur (20) réglable avec un dispositif intégré de sélection de cadence, pour scruter des données sérielles, asynchrones.

Fig. 1

Fig. 4 (Stand der Technik)

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0370528 A2